# EUROPEAN PATENT APPLICATION

(11) **EP 2 590 130 A1**
(43) Date of publication of application: **08.05.2013**
(21) Application number: 12190777.8
(22) Date of filing: 31.10.2012
(51) Int. Cl.: G06Q 30/02

(54) **Similarity and relatedness of content**

(30) Priority: 07.11.2011 US 201113290964
(71) Applicant: Microsoft Corporation, Redmond, Washington 98052 (US)
(72) Inventor: Ackerman, Nathan, Redmond, WA 98052 (US); Weare, Christopher, Redmond, WA 98052 (US)
(74) Representative: Fischer, Michael

(57) **Abstract**

Similarity and relatedness content techniques are described. Responsive to an indication that an item of content is to be made available via an online marketplace, metadata is collected from one or more network services that describes the item of content. Similarity of the item of content with one or more other items of content included in the online marketplace of the network service is calculated. A determination is made as to whether the item of content is related to the one or more other items of content available via the online marketplace based at least in part on the collected metadata, the item of content being related to the one or more other items of content based on membership in a common group. Results of the calculating and the determining are used in making the item of content available via the online marketplace.

## Description

### BACKGROUND

The techniques in which users may access content continues to expand. For example, users initially ventured physically to "bricks-and-mortar" stores to purchase songs, games, movies, and so on that were provided via computer readable storage media such as optical discs.

Techniques were subsequently developed in which a user may access an online marketplace that was configured to make the content available. Because these online marketplaces could provide access to hundreds and even thousands and tens of thousands of different items of content, online marketplaces developed functionality to help users locate content of interest. However, conventional functionality typically relied on user feedback. Therefore, these techniques were generally insufficient when a new item of content was introduced to the marketplace which could produce erroneous results that were based on a small and even nonexistent sample size of user feedback.

### SUMMARY

Similarity and relatedness content techniques are described. In one or more implementations, responsive to an indication that an item of content is to be made available via an online marketplace, metadata from one or more network services is collected that describes the item of content. Similarity of the item of content with one or more other items of content included in the online marketplace of the network service is calculated based at least in part on the collected metadata. A determination is made as to whether the item of content is related to the one or more other items of content available via the online marketplace based at least in part on the collected metadata, the item of content being related to the one or more other items of content based on membership in a common group. Results of the calculating and the determining are used in making the item of content available via the online marketplace.

In one or more implementations, a user interface is exposed for access to an online marketplace implemented by one or more computing devices of a service provider. The user interface includes a similarity feature that exposes an item of content along with one or more similar items of content that are available via the online marketplace and a relatedness feature that exposes the item of content along with one or more related items of content that are available via the online marketplace, the item of content being related to the one or more related items of content based on membership in a common group.

In one or more implementations, one or more computer-readable storage media comprise computer executable instructions that, responsive to execution on a computing device, causes the computing device to perform operations including responsive to an indication that a new item of content is to be made available via an online marketplace that was not previously available via the online marketplace, collecting metadata describing the new item of content from one or more network services. The operations also include calculating similarity of the new item of content with one or more existing items of content that are currently available via the online marketplace of the network service based at least in part on the collected metadata and determining whether the new item of content is related to the one or more existing items of content available based at least in part on the collected metadata, the item of content being related to the one or more other items of content based on membership in a common group. The operations are also configured to expose a user interface for access to the online marketplace, the user interface including a similarity feature that exposes the new item of content along with one or more similar said existing items of content that are available via the online marketplace and a relatedness feature that exposes the new item of content along with one or more related said existing items of content.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different instances in the description and the figures may indicate similar or identical items.

FIG. 1 is an illustration of an environment in an example implementation that is operable to employ similarity and relatedness of content techniques described herein.

FIG. 2 is an illustration of a system showing a content manager module in greater detail that is configured to calculate similarity and determine relatedness of items of content.

FIG. 3 depicts a system in an example implementation showing a user interface configured to display representations of similar items as calculated by the system of FIG. 2.

FIG. 4 depicts a system in an example implementation showing a user interface configured to display representations of related items as calculated by the system of FIG. 2.

FIG. 5 is a flow diagram depicting a procedure in an example implementation in which metadata is collected and used to compute similarity and relatedness of items of content in an online marketplace.

FIG. 6 is a flow diagram depicting a procedure in an example implementation in which a user interface is exposed that includes a similarity feature and a relatedness feature.

FIG. 7 illustrates an example system that includes the client device as described with reference to FIG. 1.

FIG. 8 illustrates various components of an example device that can be implemented as any type of computing device as described with reference to FIGS. 1-4 and 7 to implement embodiments of the techniques described herein.

### DETAILED DESCRIPTION

### Overview

Online marketplaces have become a useful technique for users to gain access to content such as movies, songs, games, and so on. Consequently, online marketplaces may include thousands of different items of content. In order to help users locate potential items of interest, the online marketplaces conventionally relied on user input to make suggestions regarding potential items of interest. However, these techniques were generally insufficient and operated poorly until a sufficient amount of user input was collected. For example, a first consumer to purchase rights to access an item of content may purchase that item along with another item, such as a horror movie and a comedy. Conventional techniques would therefore make an association between the horror movie and the comedy, which could be quite erroneous.

Similarity and relatedness techniques for content are described. In one or more implementations, an online marketplace may be configured to address a "cold start" problem of determining similarity and/or relatedness of a new item of content that is to be introduced to the marketplace. For example, techniques may be employed to collect structured metadata (e.g., from a content database network service), semi-structured metadata (e.g., from a collaborative network service), and/or unstructured metadata (e.g., a review or other description such as a movie poster) that describes the new item of content.

This metadata may be used to generate tags that describe the new item of content, which may then be compared with other items of content available via the marketplace. Thus, these tags may be used to determine similarity of the item of content with other items of content, relatedness of the item of content (e.g., membership in a group such as a common series of content), and so on. In this way, users may be readily exposed to the item of content via the marketplace without waiting for user feedback as was involved using traditional techniques. A variety of other examples are also contemplated, further discussion of which may be found in relation to the following sections.

In the following discussion, an example environment is first described that is operable to perform techniques described herein. Examples procedures are then described, which are operable in the example environment as well as in other environments. Likewise, the example environment is not limited to performance of the example procedures.

### Example Environment

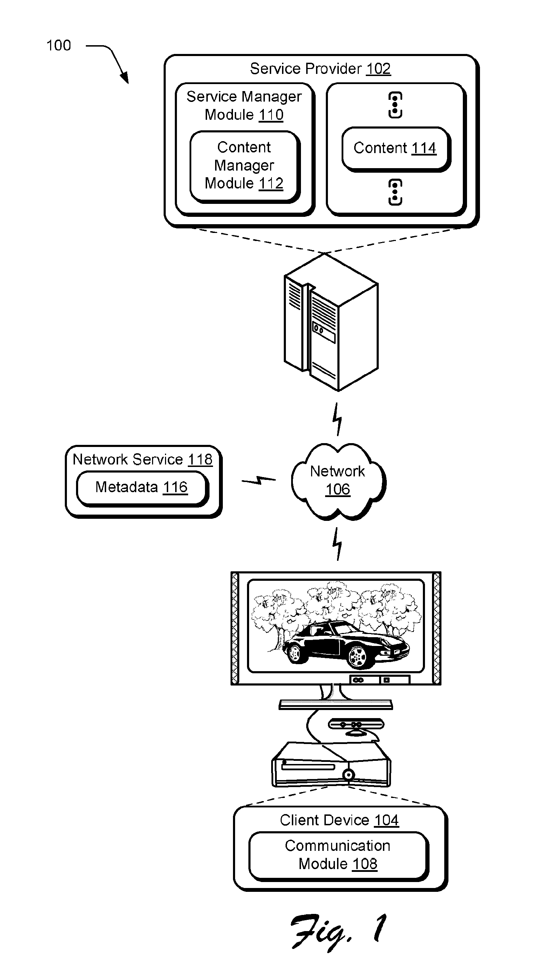

FIG. 1 is an illustration of an environment 100 in an example implementation that is operable to employ techniques described herein. The illustrated environment 100 includes a service provider 102 and a client device 104 that are communicatively coupled, one to another, over a network 106. Although the client device 104 is illustrated as being implemented by a game console and the service provider 102 is illustrated as being implemented by one or more servers, these entities may be implemented by a variety of different devices.

For example, the client device 104 may be configured as a computer that is capable of communicating over the network 106, such as a desktop computer, a mobile station, an entertainment appliance, a set-top box communicatively coupled to a display device, a wireless phone, a game console as illustrated, a tablet computer, a netbook, and so forth. Thus, the client device 104 may range from a full resource device with substantial memory and processor resources (e.g., personal computers, game consoles) to a low-resource device with limited memory and/or processing resources (e.g., conventional set-top boxes, hand-held game consoles). Additionally, the devices may be representative of one or more devices, e.g., the service provider 102 may be implemented as a network (e.g., web) service by a plurality of servers in a server farm, the client device 104 may include a game console and display device, a set-top box and remote control, and so on. A variety of other examples are also contemplated.

Although the network 106 is illustrated as the Internet, the network may assume a wide variety of configurations. For example, the network 106 may include a wide area network (WAN), a local area network (LAN), a wireless network, a public telephone network, an intranet, and so on. Further, although a single network 106 is shown, the network 106 may be configured to include multiple networks.

The client device 104 is illustrated as including a communication module 108. The communication module 108 is representative of functionality of the client device 104 to communicate via the network 106, such as to access one or more services of the service provider 102. Accordingly, the communication module 108 may be configured in a variety of different ways, such as a browser, part of an application, operating system, and so on.

The service provider 102 is illustrated as including a service manager module 110. The service manager module 110 is representative of functionality of the service provider 102 to provide one or more services that are accessible via the network 106, also referred to as network services and therefore in the following discussion "service" and "network service" may be used interchangeably. A variety of different network services may be provided by the service manager module 110, such as email, instant messaging, calendaring, photo sharing, social networking, and so on.

An example of such a network service is illustrated as being implemented by a content manager module 112. The content manager module 112 is representative of functionality of the service provider 102 involving network services that relate to content 114. This may include streaming the content 114 via the network 106 for output by the client device 104 (e.g., movies or online gaming), making the content 114 available for download (e.g., for a fee, on a subscription basis), and so on. Accordingly, the content manager module 112 may support one or more revenue techniques to support provision of the content 114, such as advertising, collection of fees, and so forth. Further, a variety of content 114 may be managed by the content manager module 112 that may accessed "online" and/or downloaded for local storage by the client device 104, such as games, movies, books, songs, television programming, and so forth.

One example of a content network service that may be supported by the content manager module 112 is an online marketplace. The online marketplace, for instance, may provide features via which a user may locate an item of content 114 of interest and then access the item of content 114, e.g., remotely, via download, and so on.

As previously described, conventional content discovery techniques relied exclusively on user feedback, such as to determine which items were purchased by a user, ratings, and so forth. Consequently these conventional techniques suffered from a "cold start" problem when a new item of content was introduced to the marketplace because a sufficient amount of user feedback was not available. Therefore, these conventional techniques could initially provide erroneous results that could hinder a user's ability to discover potential content of interest.

The content manager module 112, however, may employ techniques to address this "cold start" problem as well as support a wide variety of additional functionality. For example, the content manager module 112 may be configured to collect metadata 116 from network services 118 that describe an item of content that is to be introduced to an online marketplace, e.g., a "new" item of content. This metadata 116 may then be leveraged by the content manager module 112 to determine characteristics of the new item of content itself and therefore may be used to classify the item automatically and without user intervention, e.g., without employing user data that describes interaction with the online marketplace.

The metadata 116 may also be leveraged by the content manager module 112 to determine similarity of the new item of content to other items of content that are available via the online marketplace. This may include computing a similarity measure based on tags that describe the characteristics of the respective content items.

The metadata 116 may also be leveraged to determine relatedness of the new item of content with other items of content. The new item of content, for instance, may be a new episode of a television series, a movie sequel of an existing movie (and thus part of a movie series), and so on. Thus, the tags may be used to determine relatedness and thus membership of the new item of content in this other group.

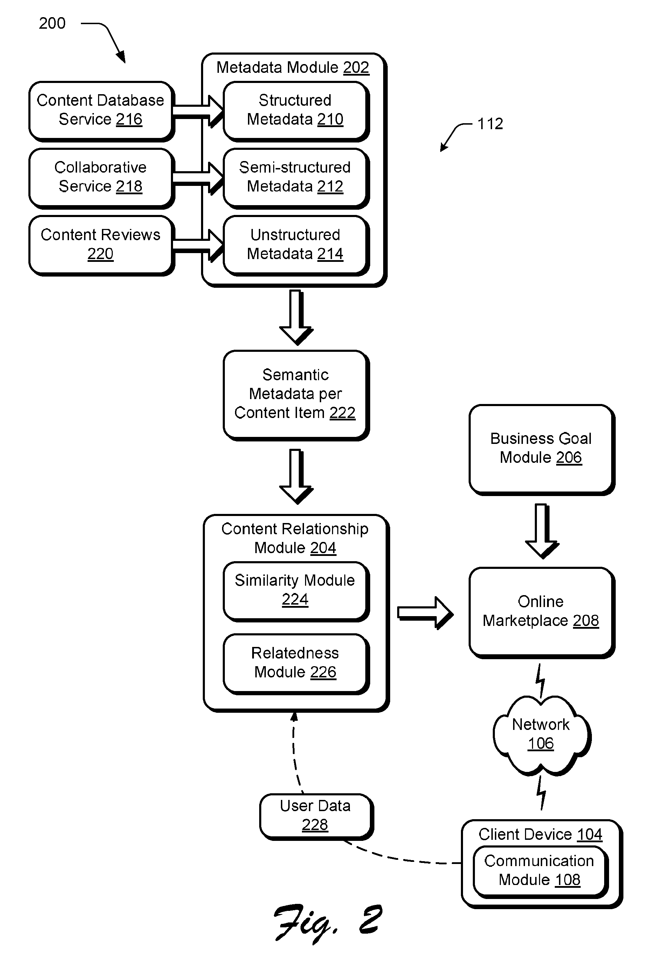

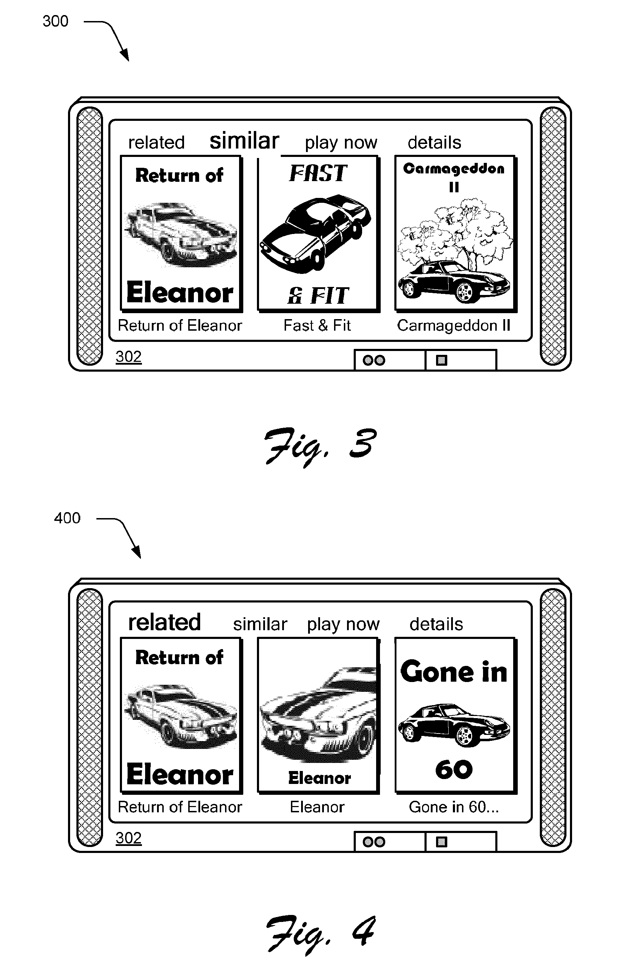

These techniques may thus be used in making the new item of content available via the marketplace, such as to include the item in a list of similar items, list of related items, and so on, examples of which are shown in relation to FIGS. 3 and 4. Further discussion of collection of metadata and calculation of similarity and determination of relatedness may be found in relation to FIG. 2.

Generally, any of the functions described herein can be implemented using software, firmware, hardware (e.g., fixed logic circuitry), or a combination of these implementations. The terms "module," "functionality," and "service" as used herein generally represent software, firmware, hardware, or a combination thereof. In the case of a software implementation, the module, functionality, or engine represents program code that performs specified tasks when executed on a processor (e.g., CPU or CPUs) and is storable in one or more computer readable storage devices and thus is implementable at least partially in hardware. The features of the techniques described below are platform-independent, meaning that the techniques may be implemented on a variety of commercial computing platforms having a variety of processors.

For example, a computing device may also include an entity (e.g., software) that causes hardware of the computing device to perform operations, e.g., processors, functional blocks, and so on. For example, the computing device may include a computer-readable medium that may be configured to maintain instructions that cause the computing device, and more particularly hardware of the computing device to perform operations. Thus, the instructions function to configure the hardware to perform the operations and in this way result in transformation of the hardware to perform functions. The instructions may be provided by the computer-readable medium to the computing device through a variety of different configurations.

One such configuration of a computer-readable medium is signal bearing medium and thus is configured to transmit the instructions (e.g., as a carrier wave) to the hardware of the computing device, such as via a network. The computer-readable medium may also be configured as a computer-readable storage medium and thus is not a signal bearing medium. Examples of a computer-readable storage medium include a random-access memory (RAM), read-only memory (ROM), an optical disc, flash memory, hard disk memory, and other memory devices that may use magnetic, optical, and other techniques to store instructions and other data.

FIG. 2 illustrates a system 200 showing a content manager module 112 of FIG. 1 in greater detail that is configured to collect metadata, calculate similarity and determine relatedness of items of content. The content manager module 112 of FIG. 1 is depicts as being implemented by a metadata module 202, a content relationship module 204, and a business goal module 206 that are configured to support an online marketplace 208.

The metadata module 202 is configured to collect metadata describing an item of content. For example, the content manager module 112 may receive an indication that a new item of content is to be added to the online marketplace 208. In response, the content manager module 112 may employ the metadata module 202 to collect metadata that describes the item of content. This may include a variety of different types to metadata, such as structured metadata 210, semi-structured metadata 212, and unstructured metadata 214.

For example, the metadata module 202 may obtain structured metadata 210, such as from a content database service 216. As the name indicates, the structured metadata 210 is obtained from a source that follows a defined structure, such as a structure that indicates a title, actors, genre, director, release date, and content description. Such descriptions may be found in content database services 216 that are configured to provide a structured resource to describe different items of content, such as movies, music, and so forth. An example of such a source is an internet movie database (IMDB).

The metadata module 202 may also be configured to collect semi-structured metadata 212. This is metadata that is obtained from a source that does not typically follow a strict structure via which particular descriptions of the content may be located. However, this metadata is generally obtained from a source that somewhat consistently describes certain characteristics of the content. An example of such a source is a collaborative service 218 via which users may access, comment, add to, and/or change a description of an item of content, e.g., Wikipedia.

The metadata module 202 may also be configured to obtain unstructured metadata 214. Again, as the name implies this is metadata that typically does not follow a defined structure, such as a content review 220 obtained from a network service such as a website that corresponds to a newspaper, news source, and so on.

The metadata module 202, after collection, may then output semantic metadata per content item 222, which may include a series of semantic tags that describe the item of content. This may include semantic tags derived from a structure and semi-structured metadata such as actors, genre, director, and so forth. These tags may also include unstructured data, such as descriptions of the item of content as "explosive," "action-packed," "thoughtful," "gripping," "suspenseful," "thriller," "terrifying," "romantic adventure," "from the makers of <movie>," and so forth. Thus, the semantic tags may describe characteristics of an item of content, even if new, without initially leveraging observed usage and thus may help counteract the "cold start" problem described above.

The semantic tags may be leveraged by the content manager module 112 in a variety of ways. As shown in FIG. 2, for instance, the semantic metadata per content item 222 is communicated to a content relationship module 204. The content relationship module 204 is representative of functionality to determine a relationship of the item of content to other items of content, such as other items of content that are available via the online marketplace 208.

One type of relationship is represented by a similarity module 224, which is representative of functionality to determine similarity of the item of content with other items of content. This may include calculation of a similarity measure based on the semantic tags generated above. For example, non-negative matrix factorization may be applied to determine "n" nearest neighbors for a given item of content.

The calculated similarity of the new item of content with other items of content in the online marketplace 208 may be used in a variety of ways. FIG. 3, for example, depicts an example implementation 300 of a display device 302 of the client device 104. The display device 302 is illustrated as display a user interface including a feature to output similar items of content. A user, for instance, may select a new movie "Return of Eleanor" and then select "similar" to cause an output of similar items. Thus, the online marketplace 208 may avail itself of the similarity measure even without initial use of user data.

Further, this similarity measure may also be used to include a new item of content. For example, the movie "Carmageddon II" in the user interface may also be considered a relatively "new" item of content in the online marketplace 208. However, through use of the techniques described herein that movie may be exposed to the user based on the similarity measure without collecting user data. Thus, in this example a user is exposed to a new movie via the online marketplace that would not be accessible at this stage using conventional techniques.

Return will now be made again to FIG. 2, the content relationship module 204 is also illustrated as including a relatedness module 226. The relatedness module 226 is representative of functionality of the content manager module 112 to determine the item of content is related to one or more other items of content. This relatedness may include whether the item of content shares membership in a group with one or more other items of content. This may include whether the items of content are part of a common series of content, such as episodes of a television series, movie series, and so on. In one or more implementations, a neural network is employed to determine a threshold value (e.g., a "cutoff') for related items, where a related item is an item that pertains to a seed item.

The determined relatedness of the new item of content with other items of content in the online marketplace 208 may be used in a variety of ways. FIG. 4, for example, is an example implementation 400 that again depicts the display device 302 of the client device 104. The display device 302 in this instance, however, is illustrated as displaying a user interface including a feature to output related items of content. A user, for instance, may select a new movie "Return of Eleanor" as before and then select "related" to cause an output of related items. Thus, the online marketplace 208 may avail itself of the determination of relatedness even without initial use of user data.

Further, this determination of relatedness may also be used to include a new item of content as was described above. For example, the movie "Gone in 60" in the user interface may also be considered a relatively "new" item of content in the online marketplace 208. However, through use of the techniques described herein that movie may be exposed to the user based on the determination of relatedness without collecting user data. Thus, in this example a user is exposed to a new movie via the online marketplace that would not be accessible otherwise using conventional techniques.

Returning again to FIG. 2, the online marketplace 208 may thus leverage the similarity and relatedness techniques to expose content via the online marketplace 208 "right away" without waiting for user data as was previously involved using conventional techniques. The content manager module 112 may also employ a variety of other functionality in order to determine how and when content is exposed in the online marketplace 208.

For example, the content manager module 112 may employ a business goal module 206 that is representative of functionality to incorporate one or more business goals in the exposure of content in the online marketplace 208. This may include selection of particular items of content for inclusion as part of the similarity and/or relatedness features based on profitability to the service provider 102 in providing those items of content. This may also include inclusion of "older" items of content that typically have a higher degree of profitability than "recently released" items of content.

Although these techniques were described as not employing user data 228 in the initial calculation of similarity and/or the determination of relatedness, user data 228 may also be utilized. For example, the content relationship module 204 may expose the user interfaces described in relation to FIGS. 3 and 4. User data 228 may then be collected which describes interaction with these user interfaces, which may be used to adjust a similarity calculation and/or relatedness determination made by the content relationship module 204. For example, a neural network may be configured to take into account observed usage as well as semantic metadata similarity.

Thus, the techniques described herein may be utilized to algorithmically generate both related and similar items without initial use of user data 228, which may be used to avoid a "cold start" problem described above. Additionally, similarity of items may be based on common traits instead of common usage patterns. This allows for two items to be similar, even if users of the online marketplace 208 "have not heard" of the second item, e.g., the item is new to the online marketplace 208, which was not possible using conventional approaches. Further, with the addition of user data 228, business scenarios may be supported to showcase "similar" items that are or are not played frequently, allowing the service provider 102 to decide on whether focus on a large catalog with long-tail content or a reduced catalog that is populated with head content. Further discussion of similarity and relatedness techniques involving content may be found in relation to the following procedures.

### Example Procedures

The following discussion describes similarity and relatedness content techniques that may be implemented utilizing the previously described systems and devices. Aspects of each of the procedures may be implemented in hardware, firmware, or software, or a combination thereof. The procedures are shown as a set of blocks that specify operations performed by one or more devices and are not necessarily limited to the orders shown for performing the operations by the respective blocks. In portions of the following discussion, reference will be made to the environment 100 of FIG. 1 and the systems 200-400 of FIGS. 2-4, respectively.

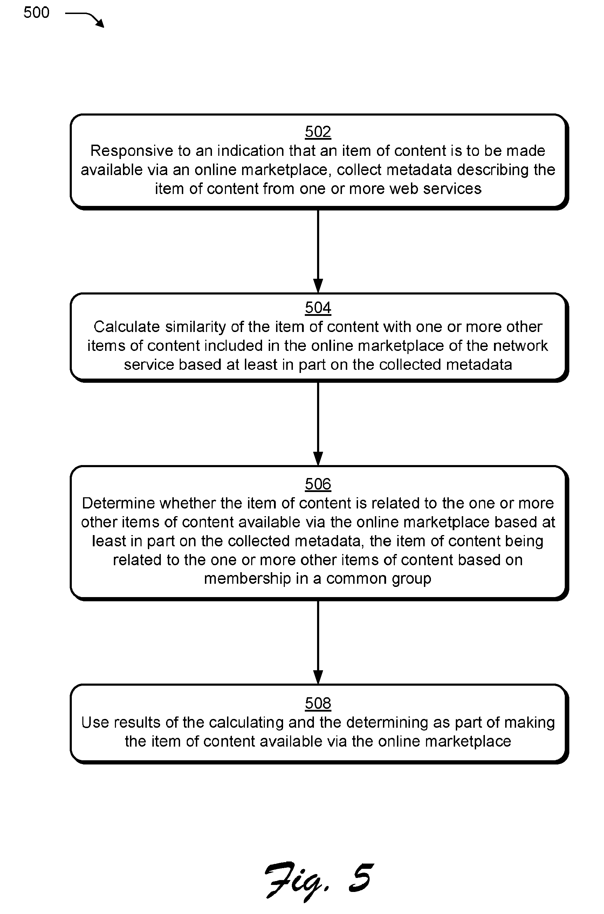

FIG. 5 depicts a procedure 500 in an example implementation in which metadata is collected and used to compute similarity and relatedness of items of content in an online marketplace. Responsive to an indication that an item of content is to be made available via an online marketplace, metadata from one or more network services is collected that describes the item of content (block 502). The service provider 102, for instance, may receive information on a new item of content to be added to the online marketplace 208. In response, the content manager module 112 may employ the metadata module 202 to collect metadata, which may include structured metadata 210, semi-structured metadata 212, and/or unstructured metadata 214.

Similarity of the item of content with one or more other items of content included in the online marketplace of the network service is calculated based at least in part on the collected metadata (block 504). The similarity module 224, for instance, may use non-negative matrix factorization to determine the "n" nearest neighbors for a given item of content. A variety of other algorithms may also be employed to determine a similarity measure.

A determination is made as to whether the item of content is related to the one or more other items of content available via the online marketplace based at least in part on the collected metadata, the item of content being related to the one or more other items of content based on membership in a common group (block 506). In this example, a threshold derived from a neural network may be used in conjunction with a similarity value to determine whether the item of content is related to another item of content, e.g., part of a common series of content.

Results of the calculating and the determining are used in making the item of content available via the online marketplace (block 508). These results, for instance, may be used to make recommendations to a user which may be used to promote content exposure with "new" content that was not possible using conventional techniques. An example of such exposure is discussed in relation to the following figure.

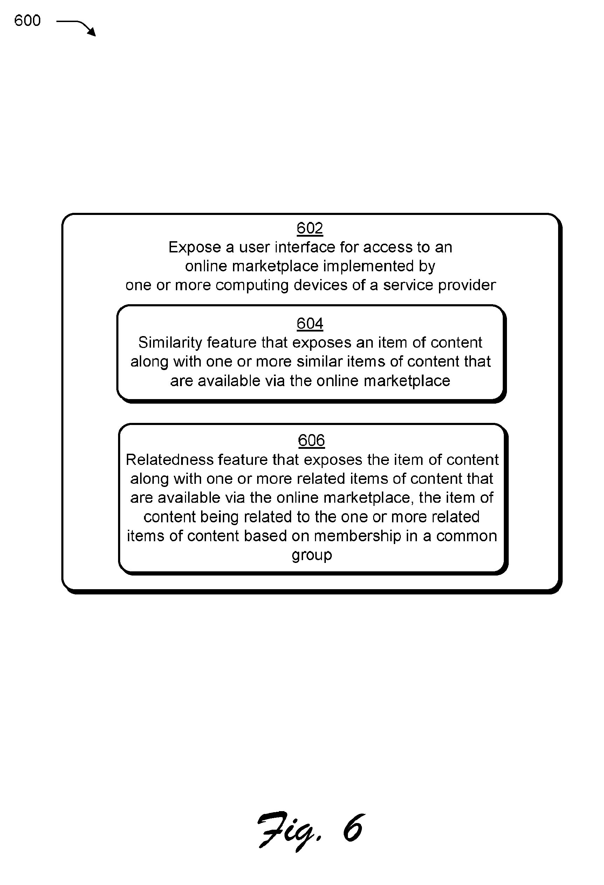

FIG. 6 depicts a procedure 600 in an example implementation in which a user interface is exposed that includes a similarity feature and a relatedness feature. A user interface is exposed for access to an online marketplace implemented by one or more computing devices of a service provider (block 602). The user interface may include a variety of features.

For example, the user interface may include a similarity feature that exposes an item of content along with one or more similar items of content that are available via the online marketplace. (block 604). As shown in FIG. 3, for instance, a representation of an item of content (e.g., "Return of Eleanor") may be displayed along with representations of other items of content that are similar (e.g., "Fast and Fit" and "Carmageddon II") in a "similar" configuration of a user interface.

The user interface also includes a relatedness feature that exposes the item of content along with one or more related items of content that are available via the online marketplace, the item of content being related to the one or more related items of content based on membership in a common group (block 606). As shown in FIG. 4, for instance, a representation of an item of content (e.g., "Return of Eleanor") may be displayed along with representations of other items of content that are related (e.g., "Eleanor" and "Gone in 60") in a "related" configuration of a user interface, which involves membership in a common group. In this instance, the common group is defined as a particular series of movies, i.e., an initial movie and subsequent sequels. A variety of other types of groups are also contemplated without departing from the spirit and scope thereof.

### Example System and Device

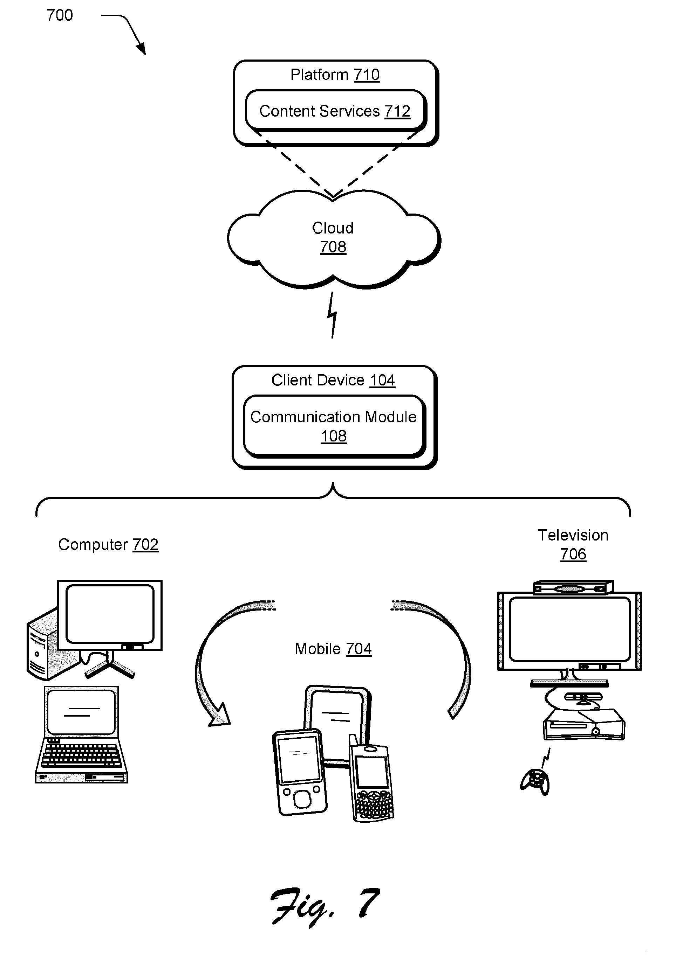

FIG. 7 illustrates an example system 700 that includes the client device 104 and communication module 108 as described with reference to FIG. 1. The example system 700 enables ubiquitous environments for a seamless user experience when running applications on a personal computer (PC), a television device, and/or a mobile device. Services and applications run substantially similar in all three environments for a common user experience when transitioning from one device to the next while utilizing an application, playing a video game, watching a video, and so on.

In the example system 700, multiple devices are interconnected through a central computing device. The central computing device may be local to the multiple devices or may be located remotely from the multiple devices. In one embodiment, the central computing device may be a cloud of one or more server computers that are connected to the multiple devices through a network, the Internet, or other data communication link. In one embodiment, this interconnection architecture enables functionality to be delivered across multiple devices to provide a common and seamless experience to a user of the multiple devices. Each of the multiple devices may have different physical requirements and capabilities, and the central computing device uses a platform to enable the delivery of an experience to the device that is both tailored to the device and yet common to all devices. In one embodiment, a class of target devices is created and experiences are tailored to the generic class of devices. A class of devices may be defined by physical features, types of usage, or other common characteristics of the devices.

In various implementations, the client device 104 may assume a variety of different configurations, such as for computer 702, mobile 704, and television 706 uses. Each of these configurations includes devices that may have generally different constructs and capabilities, and thus the client device 104 may be configured according to one or more of the different device classes. For instance, the client device 104 may be implemented as the computer 702 class of a device that includes a personal computer, desktop computer, a multi-screen computer, laptop computer, netbook, and so on.

The client device 104 may also be implemented as the mobile 704 class of device that includes mobile devices, such as a mobile phone, portable music player, portable gaming device, a tablet computer, a multi-screen computer, and so on. The client device 104 may also be implemented as the television 706 class of device that includes devices having or connected to generally larger screens in casual viewing environments. These devices include televisions, set-top boxes, gaming consoles, and so on. The techniques described herein may be supported by these various configurations of the client device 104 and are not limited to the specific examples the techniques described herein.

The cloud 708 includes and/or is representative of a platform 710 for content services 712, such as for the service manager module 110 and content manager module 112 described in relation to FIGS. 1 and 2. The platform 710 abstracts underlying functionality of hardware (e.g., servers) and software resources of the cloud 708. The content services 712 may include applications and/or data that can be utilized while computer processing is executed on servers that are remote from the client device 104. Content services 712 can be provided as a service over the Internet and/or through a subscriber network, such as a cellular or Wi-Fi network.

The platform 710 may abstract resources and functions to connect the client device 104 with other computing devices. The platform 710 may also serve to abstract scaling of resources to provide a corresponding level of scale to encountered demand for the content services 712 that are implemented via the platform 710. Accordingly, in an interconnected device embodiment, implementation of functionality of the functionality described herein may be distributed throughout the system 700. For example, the functionality may be implemented in part on the client device 104 as well as via the platform 710 that abstracts the functionality of the cloud 708.

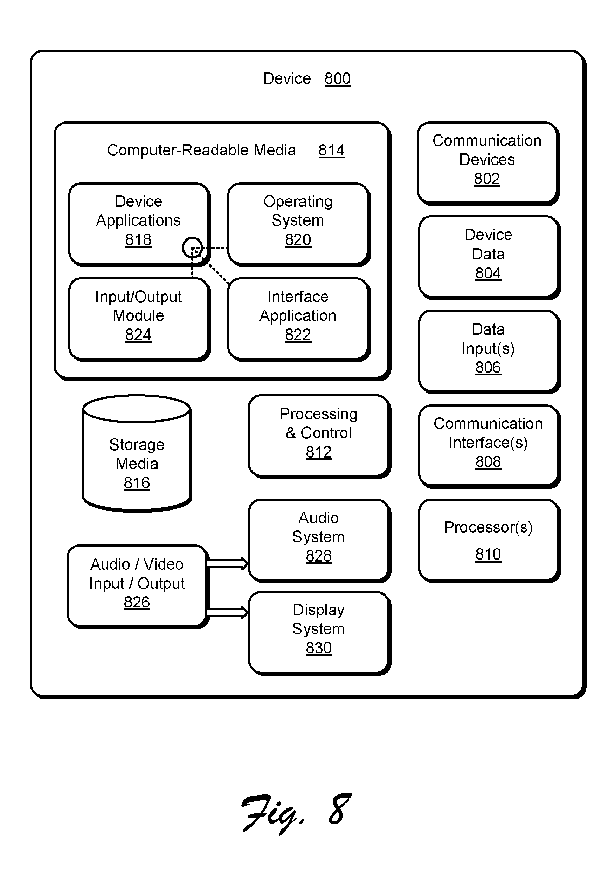

FIG. 8 illustrates various components of an example device 800 that can be implemented as any type of computing device as described with reference to FIGS. 1, 2, and 7 to implement embodiments of the techniques described herein. Device 800 includes communication devices 802 that enable wired and/or wireless communication of device data 804 (e.g., received data, data that is being received, data scheduled for broadcast, data packets of the data, etc.). The device data 804 or other device content can include configuration settings of the device, media content stored on the device, and/or information associated with a user of the device. Media content stored on device 800 can include any type of audio, video, and/or image data. Device 800 includes one or more data inputs 806 via which any type of data, media content, and/or inputs can be received, such as user-selectable inputs, messages, music, television media content, recorded video content, and any other type of audio, video, and/or image data received from any content and/or data source.

Device 800 also includes communication interfaces 808 that can be implemented as any one or more of a serial and/or parallel interface, a wireless interface, any type of network interface, a modem, and as any other type of communication interface. The communication interfaces 808 provide a connection and/or communication links between device 800 and a communication network by which other electronic, computing, and communication devices communicate data with device 800.

Device 800 includes one or more processors 810 (e.g., any of microprocessors, controllers, and the like) which process various computer-executable instructions to control the operation of device 800 and to implement embodiments of the techniques described herein. Alternatively or in addition, device 800 can be implemented with any one or combination of hardware, firmware, or fixed logic circuitry that is implemented in connection with processing and control circuits which are generally identified at 812. Although not shown, device 800 can include a system bus or data transfer system that couples the various components within the device. A system bus can include any one or combination of different bus structures, such as a memory bus or memory controller, a peripheral bus, a universal serial bus, and/or a processor or local bus that utilizes any of a variety of bus architectures.

Device 800 also includes computer-readable media 814, such as one or more memory components, examples of which include random access memory (RAM), non-volatile memory (e.g., any one or more of a read-only memory (ROM), flash memory, EPROM, EEPROM, etc.), and a disk storage device. A disk storage device may be implemented as any type of magnetic or optical storage device, such as a hard disk drive, a recordable and/or rewriteable compact disc (CD), any type of a digital versatile disc (DVD), and the like. Device 800 can also include a mass storage media device 816.

Computer-readable media 814 provides data storage mechanisms to store the device data 804, as well as various device applications 818 and any other types of information and/or data related to operational aspects of device 800. For example, an operating system 820 can be maintained as a computer application with the computer-readable media 814 and executed on processors 810. The device applications 818 can include a device manager (e.g., a control application, software application, signal processing and control module, code that is native to a particular device, a hardware abstraction layer for a particular device, etc.). The device applications 818 also include any system components or modules to implement embodiments of the techniques described herein. In this example, the device applications 818 include an interface application 822 and an input/output module 824 that are shown as software modules and/or computer applications. The input/output module 824 is representative of software that is used to provide an interface with a device configured to capture inputs, such as a touchscreen, track pad, camera, microphone, and so on. Alternatively or in addition, the interface application 822 and the input/output module 824 can be implemented as hardware, software, firmware, or any combination thereof. Additionally, the input/output module 824 may be configured to support multiple input devices, such as separate devices to capture visual and audio inputs, respectively.

Device 800 also includes an audio and/or video input-output system 826 that provides audio data to an audio system 828 and/or provides video data to a display system 830. The audio system 828 and/or the display system 830 can include any devices that process, display, and/or otherwise render audio, video, and image data. Video signals and audio signals can be communicated from device 800 to an audio device and/or to a display device via an RF (radio frequency) link, S-video link, composite video link, component video link, DVI (digital video interface), analog audio connection, or other similar communication link. In an embodiment, the audio system 828 and/or the display system 830 are implemented as external components to device 800. Alternatively, the audio system 828 and/or the display system 830 are implemented as integrated components of example device 800.

### Conclusion

Although the invention has been described in language specific to structural features and/or methodological acts, it is to be understood that the invention defined in the appended claims is not necessarily limited to the specific features or acts described. Rather, the specific features and acts are disclosed as example forms of implementing the claimed invention.

## Claims

1. A method implemented by one or more computing devices, the method comprising:
responsive to an indication that an item of content is to be made available via an online marketplace, collecting metadata describing the item of content from one or more network services (502);
calculating similarity of the item of content with one or more other items of content included in the online marketplace of the network service based at least in part on the collected metadata (504);
determining whether the item of content is related to the one or more other items of content available via the online marketplace based at least in part on the collected metadata, the item of content being related to the one or more other items of content based on membership in a common group (506); and
using results of the calculating and the determining as part of making the item of content available via the online marketplace (508).

2. A method as described in claim 1, wherein the using includes display of a representation of the item of content in a user interface responsive to selection of another said item of content in the online marketplace that is calculated to be similar.

3. A method as described in claim 1, further comprising calculating one or more semantic tags from the collected metadata, the one or more semantic tags used in the calculating of the similarity and the determining of the relatedness.

4. A method as described in claim 1, wherein the using includes display of a representation of the item of content responsive to selection of another said item of content in the online marketplace that is determined to be related.

5. A method as described in claim 1, wherein the metadata includes structured metadata and semi-structured metadata.

6. A method as described in claim 1, wherein the metadata includes unstructured metadata and further comprising parsing the unstructured metadata to locate descriptions of the item of content.

7. A method as described in claim 6, wherein the unstructured metadata is configured as a review of the item of content.

8. A method as described in claim 1, wherein the using employs one or more business goals to determine at least one other item of content that is to displayed along with the item of content as available via the online marketplace.

9. A method as described in claim 1, wherein the calculating, the determining, and the using are performed initially without use of user data collected by the online marketplace.

10. One or more computing devices having one or more modules (110, 112) implemented at least partially in hardware and configured to perform operations comprising:
exposing a user interface for access to an online marketplace implemented by one or more computing devices of a service provider, the user interface including:
a similarity feature that exposes an item of content along with one or more similar items of content that are available via the online marketplace; and
a relatedness feature that exposes the item of content along with one or more related items of content that are available via the online marketplace, the item of content being related to the one or more related items of content based on membership in a common group.
